# EUROPEAN PATENT APPLICATION

(11) **EP 3 419 309 A1**
(43) Date of publication of application: **26.12.2018**
(21) Application number: 17176527.4
(22) Date of filing: 19.06.2017
(51) Int. Cl.: H04R 5/02, H04S 7/00, H04R 1/02

(54) **METHODS AND APPARATUSES FOR CONTROLLING THE AUDIO OUTPUT OF LOUDSPEAKERS**

(71) Applicant: Nokia Technologies Oy, 02610 Espoo (FI)
(72) Inventor: LILJEROOS, Ari-Pekka, 33960 Pirkkala (FI); ERONEN, Antti Johannes, 33820 Tampere (FI); LEPPÄNEN, Jussi Artturi, 33580 Tampere (FI)
(74) Representative: Nokia EPO representatives

(57) **Abstract**

This specification relates to a method comprising controlling an audio output of a first loudspeaker and one or more second loudspeakers based on a signal indicative of a detected position of a user's head on a headrest, the first loudspeaker being associated with the headrest, and wherein the one or more second loudspeakers are located away from the headrest.

## Description

### Technical Field

The present specification relates to methods and apparatuses for controlling the audio output of loudspeakers.

### Background

Consumers of audio content may wish to listen to audio output from loudspeakers while resting their head on a headrest (e.g. a pillow). However, the presence of the headrest may affect the quality of the audio heard by the consumer. Therefore, it may be desirable to control the audio output of the loudspeakers in such a way as to take into account the fact that the consumer is resting their head on a headrest.

### Summary

According to a first aspect, this specification describes a method comprising: based on a signal indicative of a detected position of a user's head on a headrest, the headrest having an associated first loudspeaker, controlling an audio output of the first loudspeaker and one or more second loudspeakers, wherein the one or more second loudspeakers are located away from the headrest.

Controlling the audio output of the first and second loudspeakers may comprise: causing a first selection of one or more of the first and second loudspeakers to provide audio output in response to the head of the user being detected to be in a first head position on the headrest.

Controlling the audio output of the first and second loudspeakers may comprise: causing a second selection of one or more of the first and second loudspeakers to provide audio output in response to the head of the user being detected to be in a second head position on the headrest.

The first selection may comprise a plurality of second loudspeakers.

The second selection may comprise the first loudspeaker and at least one second loudspeaker.

The first selection may comprise two second loudspeakers, thereby to provide stereo audio output to the user of the headrest.

The first selection may comprise at least three second loudspeakers, thereby to provide surround sound audio output to the user of the headrest.

The second selection may comprise the first loudspeaker and one second loudspeaker, thereby to provide stereo audio output to the user of the headrest.

The method of the first aspect may further comprise causing audio processing to be performed on at least one audio signal which is to be output by the second selection of one or more of the first and second loudspeakers, the audio processing comprising at least one of: delaying an audio signal which is to be output by the first loudspeaker, disabling crosstalk cancellation, and filtering an audio signal which is to be output by the first loudspeaker.

According to a second aspect, this specification describes apparatus configured to perform any method described with reference to the first aspect.

According to a third aspect, this specification describes computer readable instructions, which when executed by computing apparatus, causes the computing apparatus to perform any method described with reference to the first aspect.

According to a fourth aspect, this specification describes apparatus comprising at least one processor, and at least one memory including computer program code, which when executed by the at least one processor, causes the apparatus to: based on a signal indicative of a detected position of a user's head on a headrest, the headrest having an associated first loudspeaker, control an audio output of the first loudspeaker and one or more second loudspeakers, wherein the one or more second loudspeakers are located away from the headrest.

Controlling the audio output of the first and second loudspeakers may comprise: causing a first selection of one or more of the first and second loudspeakers to provide audio output in response to the head of the user being detected to be in a first head position on the headrest.

Controlling the audio output of the first and second loudspeakers may comprise: causing a second selection of one or more of the first and second loudspeakers to provide audio output in response to the head of the user being detected to be in a second head position on the headrest.

The first selection may comprise a plurality of second loudspeakers.

The second selection may comprise the first loudspeaker and at least one second loudspeaker.

The first selection may comprise two second loudspeakers, thereby to provide stereo audio output to the user of the headrest.

The first selection may comprise at least three second loudspeakers, thereby to provide surround sound audio output to the user of the headrest.

The second selection may comprise the first loudspeaker and one second loudspeaker, thereby to provide stereo audio output to the user of the headrest.

The computer program code, when executed by the at least one processor, may further cause the apparatus to cause audio processing to be performed on at least one audio signal which is to be output by the second selection of one or more of the first and second loudspeakers, the audio processing comprising at least one of: delaying an audio signal which is to be output by the first loudspeaker, disabling crosstalk cancellation, and filtering an audio signal which is to be output by the first loudspeaker.

According to a fifth aspect, this specification describes a computer-readable medium having computer-readable code stored thereon, the computer readable code, which executed by at least one processor, causes performance of: based on a signal indicative of a detected position of a user's head on a headrest, the headrest having an associated first loudspeaker, controlling an audio output of the first loudspeaker and one or more second loudspeakers, wherein the one or more second loudspeakers are located away from the headrest.

The computer-readable code stored on the medium of the fifth aspect may further cause performance of any of the operations described with reference to the method of the first aspect.

According to a sixth aspect, this specification describes apparatus comprising means for: based on a signal indicative of a detected position of a user's head on a headrest, the headrest having an associated first loudspeaker, controlling an audio output of the first loudspeaker and one or more second loudspeakers, wherein the one or more second loudspeakers are located away from the headrest.

The apparatus of the sixth aspect may further comprise means for causing performance of any of the operations described with reference to the method of the first aspect.

According to a seventh aspect, this specification describes a system comprising: any of the apparatuses described with reference to any of the second, fourth and sixth aspects, a headrest having an associated first loudspeaker, one or more second loudspeakers which are located away from the headrest, and a head position detector configured to output a signal indicative of a detected position of a user's head on a headrest.

The one or more second loudspeakers may comprise two second loudspeakers which are located to enable provision of stereo audio output to the user of the headrest.

The one or more second loudspeakers may comprise at least three second loudspeakers which are located to enable provision of surround sound audio output to the user of the headrest.

The head position detector may comprise one of the following: a pressure sensor, an optical sensor, and an ultrasound sensor.

### Brief Description of the Drawings

For a more complete understanding of the methods, apparatuses and computer-readable instructions described herein, reference is now made to the accompanying drawings, in which:
Figure 1 illustrates an example of a system for providing audio output to a user via loudspeakers;
Figures 2A and 2B illustrate an example of a first way in which the audio output of loudspeakers may be controlled;
Figures 3A and 3B illustrate an example of a second way in which the audio output of loudspeakers may be controlled;
Figure 4 is a flowchart illustrating examples of operations which may be performed to control the audio output of loudspeakers in the systems illustrated by Figures 1 to 3B;
Figure 5 is a schematic diagram of an example configuration of apparatus configured to perform various operations including those described with reference to Figure 4; and
Figure 6 illustrates an example of a computer-readable storage medium with computer readable instructions stored thereon.

### Detailed Description

In the description and drawings, like reference numerals may refer to like elements throughout.

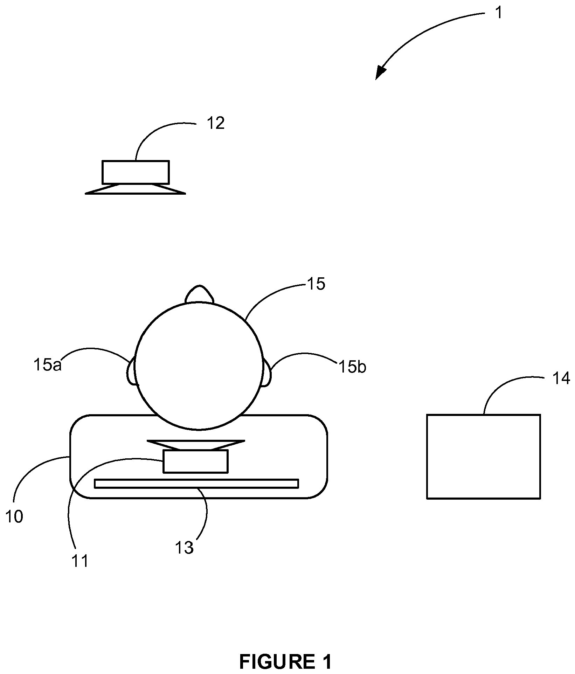

Figure 1 illustrates an example of a system 1 for providing audio output to a user. The system 1 comprises a headrest 10, a first loudspeaker 11, one or more second loudspeakers 12, a head position detector 13 and control apparatus 14. Each of these components of the system 1 will now be described in more detail below.

The headrest 10 is a structure for supporting the head and/or neck of a user. For example, as illustrated in Figure 1, a user may rest their head 15 on a surface of the headrest 10. The headrest 10 may, in general be any type of headrest which is capable of supporting the head and/or neck of a user. For example, the headrest 10 may be a pillow which can be moved around to be used at a desired location (e.g. a portable pillow which can be placed on a bed, a couch or on the floor). The headrest 10 may also be other types of headrest such as a cushion, a part of a mattress, a part of bed, a part of a couch or a part of chair. In some examples, the headrest 10 may be attachable to other structures such as a bed, a couch or a chair.

The head position detector 13 is a detector which is configured to detect the position of the head 15 of a user on the headrest 10. The term "position" used herein may comprise the location of the head 15 on a surface of the headrest 10 and/or the orientation of the head 15 with respect to the surface of the headrest 10. By way of illustration, in the example of Figure 1, the head 15 is located in the middle of the headrest 10 and orientated such that the front of the head 15 (e.g. the face of the user) is facing away from the headrest 10 (put another way, the back of the head 15 of the user is resting on the headrest 10). In this example, the orientation of the head 15 with respect to the headrest 10 is such that the line joining the ears 15a, 15b of the user is substantially parallel to the surface of the headrest 10 on which the head 15 is resting. In other words, neither of the ears 15a, 15b of the user is in contact with the headrest 10.

The head position detector 13 may be disposed within the headrest 10 (as illustrated by Figure 1). Alternatively, in some examples, the head position detector 13 may be disposed on an outer surface of the headrest 10. In some examples, the head position detector 13 may be disposed between the headrest 10 and an underlying surface. In some examples, the head position detector 13 may be disposed separately to the headrest 10 (e.g. above the headrest 10 on another structure such as a shelf).

The head position detector 13 may, in general, be any type of detector which can detect the position of the head 15 of the user on the headrest 10. The head position detector 13 may comprise one or more sensors for detecting the head position of a user. In some examples, the sensors may be of the same type (e.g. one or more pressure sensors as described below). Alternatively, in some examples, the head position detector 13 may comprise a plurality of different types of sensors for detecting the head position of the user on the headrest.

In some examples, the head position detector 13 may comprise a pressure sensor (e.g. a flexible pressure sensing foil). Such a pressure sensor may be disposed such that, when the headrest 10 is in use, the head 15 of the user rests (either directly or indirectly) at least in part on the pressure sensor, thereby to allow the pressure sensor to detect pressure exerted by the weight of the head 15. For example, the pressure sensor may be disposed within the headrest 10, on top of the headrest 10 or underneath the headrest 10. The pressure sensor may be configured to detect a two dimensional (2D) spatial profile of the pressure exerted by the head 15, thus allowing the position (location and/or orientation) of the head 15 to be determined based on the 2D spatial profile.

In some examples, instead of a pressure sensor, the head position detector 13 may comprise an optical sensor (e.g. an infra-red sensor) or an ultrasound sensor to detect head position.

The first loudspeaker 11 is a loudspeaker which is associated with the headrest 10. The association may be a positional association (e.g. the first loudspeaker may be a loudspeaker which is co-located with the headrest 10). The first loudspeaker 11 may be integrated with the headrest 10, may be couplable/attachable to the headrest 10 or may simply be placed in proximity (but not physically attached) to the headrest 10. In the example illustrated by Figure 1, the first loudspeaker 11 is disposed within the headrest 10. Alternatively, in some examples, the first loudspeaker 11 may be disposed on an outer surface of the headrest 10. In some examples, the first loudspeaker 11 may be disposed between the headrest 10 and an underlying surface. In this way, the first loudspeaker 11 can output audio close to the user's head 15 when the head 15 is resting on the headrest 10.

The one or more second loudspeakers 12 are loudspeakers which (unlike the first loudspeaker 11) are located away from the headrest 10. In other words, unlike the first loudspeaker 11, the one or more second loudspeakers 12 are not co-located with the headrest 10. As such, the one more second loudspeakers 12 may be loudspeakers which are located further away from the headrest 10 compared to the first loudspeaker 11. For instance, the second loudspeakers 12 may be distributed around the space (e.g. a room) in which the headrest 10 and first loudspeaker 11 are located. For example, the second loudspeakers 12 may be located on a wall, a bed, the floor or a ceiling of a room. The second loudspeakers 12 may be located so as to provide certain types of audio content. For example, the second loudspeakers may be located so as to provide stereo audio content or surround sound audio content to a user resting their head 15 on the headrest 10.

It will be appreciated that the loudspeakers described herein may be any appropriate type of loudspeaker. For example, the first and second loudspeakers 11, 12 may be flat loudspeakers. In particular, the first loudspeaker 11 (which is associated with the headrest 10) may be a flat loudspeaker so as to retain the comfort of the headrest 10 for a user resting on their head the headrest 10.

The control apparatus 14 is a part of the system 1 which is configured to control one or more of the other parts of the system 1. In particular, the control apparatus 14 is configured to control the audio output of the first and second loudspeakers 11, 12 based on the position of the head 15 of the user on the headrest 10. As such, the control apparatus may be able to control the audio output of the loudspeakers 11, 12 so as to compensate for adverse audio effects caused by the position of the head and/or ears of the user on the headrest 10. More specifically, the control apparatus 14 may calculate new parameters for the audio output of the first and second loudspeakers 11, 12 and then use these new parameters to configure the audio output of the loudspeakers 11, 12 in a desired manner. Example ways in which the audio output of the first and second loudspeakers 11, 12 can be controlled will be described below in more detail.

The control apparatus 14 may be in (wireless or wired) communication with other parts of the system 1 (e.g. the first and second loudspeakers 11, 12 and the head position detector 13). As such, the control apparatus 14 may send signals to other parts of the system 1 and/or receive signals from other parts of the system 1 to enable various control functions to be carried out.

The control apparatus 14 may be configured to receive one or more signals from the head position detector 13. The one or more received signals may indicate a position of the head 15 of the user on the headrest 10. The control apparatus may be configured to determine the position of the head 15 on the headrest 10 based on the one or more signals received from the head position detector 13. By detecting the position of the head 15, the control apparatus 14 may be able to determine which part of the user's head is in contact with the headrest 10. For example, if the head position detector 13 comprises a pressure sensor as described above, the control apparatus 14 may be configured to distinguish between spatial pressure profiles exerted by the back of a user's head, the front of the user's head, the right side of a user's head and the left side of a user's head. In this way, the control apparatus 14 may be able to determine the positions of each of the ears 15a, 15b of the user relative to the headrest 10.

The control apparatus 14 may be disposed separately to the headrest 10 (as illustrated in Figure 1). For example, the control apparatus 14 may be part of a computer or a separate dedicated control unit. Alternatively, the control apparatus 14 may be disposed within the headrest 10 so that it can be easily moved together with the headrest 10.

The system 1 may further comprise a multi-channel power amplifier (not shown). The multi-channel power amplifier may be configured to receive audio signals from an audio source (e.g. a radio receiver, a CD-player, a TV) and to amplify the received audio signals such that the amplified audio signals are able to drive (or power) loudspeakers. The multi-channel power amplifier may output the amplified audio signals via one or more audio channels to drive one or more loudspeakers. For example, the amplified audio signals may be output via two audio channels to drive two stereo loudspeakers, or output via three or more audio channels to drive three or more loudspeakers in a surround sound configuration (e.g. six audio channels for 5.1 surround sound). The multi-channel power amplifier may be separate to the control apparatus 14 and communicatively coupled to the control apparatus 14. Alternatively, the multi-channel power amplifier may be part of the control apparatus 14 and communicatively coupled to other parts of the control apparatus 14. The control apparatus 14 may be configured to control the audio signals that are output by the multi-channel power amplifier. Thus, the multi-channel power amplifier may be configured to receive the audio signals from an audio source via the control apparatus 14 (or via the other parts of the control apparatus 14 if the multi-channel power amplifier is part of the control apparatus 14).

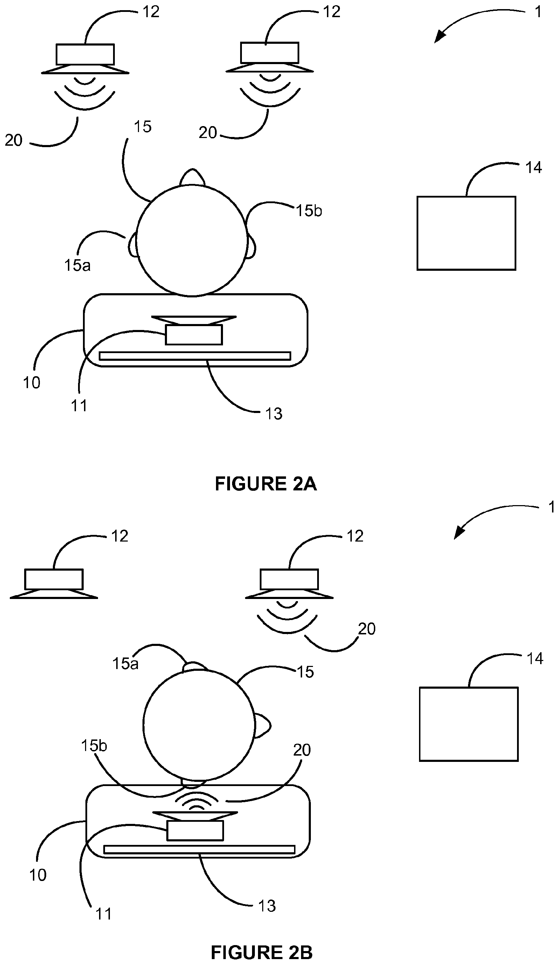

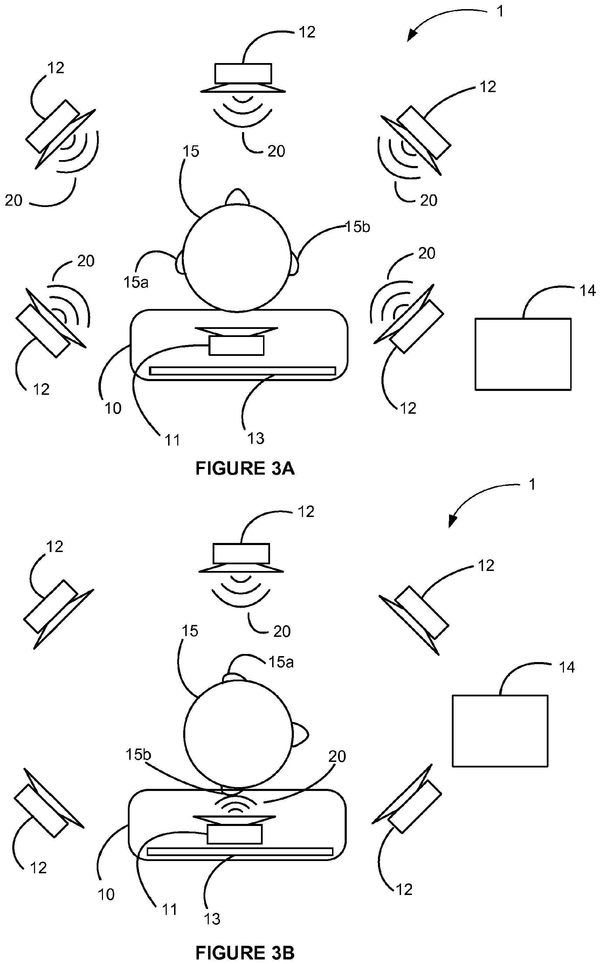

When a user's head 15 is in certain head positions on the headrest 10, it may be difficult to produce a desirable audio experience for the user with only the one or more second loudspeakers 12. For example, when the user rests their head 15 on one of its sides so that one of their ears 15a, 15b is in contact with or close to the headrest 10 (as illustrated by Figures 2B and 3B), it may be difficult for that ear to hear sound from the one or more second loudspeakers 12 due to the muffling effect of the headrest 10. In this situation, the first loudspeaker 11 (which is associated with the headrest 10 and able to output audio close to the user's head 15) may be used to improve the audio experience of the user. This will now be described in more detail with reference to Figures 2A to 3B.

Figures 2A and 2B illustrate a first way in which the audio output of loudspeakers can be controlled. In this example, the system 1 comprises two second loudspeakers 12 which are both located away from the headrest 10 (e.g. the two second loudspeakers may be located on a wall, a bed, the floor or a ceiling of a room).

Figure 2A illustrates a first audio output state of the system 1 in which the two second loudspeakers 12 are both providing audio output 20 and the first loudspeaker 11 is not providing audio output. The two second loudspeakers 12 may be located so as to provide stereo audio output to a user of the headrest 10 (e.g. by rendering binaural audio which creates left and right ear signals for respective left and right second loudspeakers 12). Thus, one of the two second loudspeakers 12 may be a left loudspeaker for outputting audio intended for the left ear of the user, and the other one of the two second loudspeakers 12 may be a right loudspeaker for outputting audio intended for the right ear of the user. As such, the two second loudspeakers 12 may allow the user to experience spatial audio with directional information. In this first audio output state, crosstalk cancellation may be applied in order to prevent audio from a left loudspeaker leaking to the right ear and vice versa.

Figure 2B illustrates a second audio output state of the system 1 in which the first loudspeaker 11 and only one of the two second loudspeakers 12 are providing audio output 20. In the example illustrated by Figure 2B, one of the second loudspeakers 12 is providing audio output intended for the left ear 15a of the user and the first loudspeaker 11 is providing audio output intended for the right ear of the user. Alternatively, it will be appreciated that in the second audio output state one of the second loudspeakers 12 may provide audio output intended for the right ear 15b of the user and the first loudspeaker 11 may provide audio output intended for the left ear 15a of the user. Therefore, in the second audio output state, the user may also be provided with stereo audio content.

Although Figure 2B illustrates only one of the two second loudspeakers 12 providing audio output in the second audio state, in some examples a plurality of second loudspeakers 12 (e.g. both of the second loudspeakers 12 of Fig. 2B) may provide audio output intended for one of the ears 15a, 15b of the user in the second audio output state. In some examples, the plurality of second loudspeakers 12 may all provide the same audio signal. In some examples, the audio signals to be output by the plurality of second loudspeakers 12 may be processed based on distances (which may, for example, be defined during installation of the system) between each of the plurality of second loudspeakers 12 and the user's head 15. The processing may cause the audio output by the two second loudspeakers 12 to sound to the user as if it originates from a particular location (e.g. a point between the two second loudspeakers 12 and/or in the space directly above the ear which is facing away from the headrest 10). For example, the apparent origin of the audio may be aligned with the line joining the two ears 15a, 15b in Figure 2B.

In the example of Figures 2A and 2B, the control apparatus 14 may control the loudspeakers 11, 12 to transition from the first audio output state to the second audio output state in the following way. The head position detector 13 may detect that the user's head is resting on one of its sides (e.g. a position in which the right ear 15b is pressed against the headrest 10 as illustrated by Figure 2B). The head position detector 13 may send a signal indicative of the detected head position to the control apparatus 14. The control apparatus 14 may then determine the user's head position based on the signal. In response to detecting that the head 15 is in a position in which the head 15 is resting on its side, the control apparatus 14 may select the first loudspeaker 11 and one of the second loudspeakers 12 to provide audio output. The audio output provided by the first loudspeaker 11 may be audio output intended for the ear corresponding to the side of the head 15 in contact with the headrest 10. The audio output provided by the selected second loudspeaker 12 may be audio output intended for the other ear which is facing away from the headrest 10. The second loudspeaker 12 which is selected to provide audio output in the second audio output state may be selected based on a determination as to which one of the two second loudspeakers 12 is closer to the ear that is facing away from the headrest 10. For example, the second loudspeaker 12 that is closer to the ear facing away from the headrest 10 may be selected to provide audio output.

The above-described transition may be desirable because, when one of the user's ears 15a, 15b is in contact with the headrest 10, the stereo audio content experienced by the user may be of relatively low quality. This is because the ear that is in contact with the headrest 10 may not be able to hear audio from the second loudspeakers 12 due to the muffling effect of the headrest 10. By transitioning to the second audio output state, the user may be able to continue to experience relatively high quality stereo audio despite the fact that one of the user's ears is in contact with the headrest 10.

In order to transition to the second audio output state, the control apparatus 14 may additionally cause audio processing to be performed on the audio signals to be output by the loudspeakers 11, 12. The audio processing may comprise compensating for the differences in the distance and orientation of the loudspeakers 11, 12 in relation to the user's head. For example, the audio signal to be output by the first loudspeaker 11 may be delayed so that its delay matches the delay of the audio signal to be output by the selected second loudspeaker 12.

The audio processing may comprise causing the above-mentioned crosstalk cancellation to be disabled. This may be possible because the headrest 10 may prevent crosstalk between the first and second loudspeakers, since the headrest 10 may muffle any audio from the selected second loudspeaker 12 reaching the ear that is in contact with the headrest 10. Therefore, crosstalk cancellation may not be needed in this situation. The disabling of crosstalk cancellation may reduce the amount of audio processing required in the second audio output state.

The audio processing may comprise processing the audio signal to be output by the first loudspeaker 11 so as to reduce and/or cancel the muffling effect of the headrest 10. This may be performed by filtering the audio signal to be output by the first loudspeaker 11 with a filter which has a response which is the inverse of the response caused by the headrest 10.

Figures 3A and 3B illustrate a second way in which the audio output of loudspeakers may be controlled. In this example, the system 1 comprises five second loudspeakers 12 which are all located away from the headrest 10. As above, the five second loudspeakers 12 may be located on a wall, a bed, the floor and/or a ceiling of a room.

Figure 3A illustrates a first audio output state of the system 1 in which the five second loudspeakers 12 are providing audio output 20 and the first loudspeaker 11 is not providing audio output. The five second loudspeakers 12 may be located so as to provide surround sound audio output to a user of the headrest 10 (e.g. 5.1 or 7.2 surround sound). For example, a 5.1 surround sound arrangement (which is known and so will not be described in much detail herein) may comprise three loudspeakers for outputting respective front left, front right and front centre audio outputs (e.g. located on the ceiling of a room), two loudspeakers for outputting respective left surround and right surround audio outputs (e.g. located on either side of the user), and a subwoofer. As a result, the user can be provided with a spatial audio scene which may be created with amplitude panning techniques.

Figure 3B illustrates a second audio output state of the system 1 in which the first loudspeaker 11 and only one of the five second loudspeakers 12 are providing audio output 20. In the example illustrated by Figure 3B, one of the five second loudspeakers 12 is providing audio output intended for the left ear of the user and the first loudspeaker is providing audio output intended for the right ear of the user. Alternatively, it will be appreciated that in the second audio output state one of the second loudspeakers 12 may provide audio output intended for the right ear of the user and the first loudspeaker 11 may provide audio output intended for the left ear of the user. Therefore, in the second audio output state, the user may be provided with stereo audio content rather than surround sound audio content.

Although Figure 3B illustrates only one of the five second loudspeakers 12 providing audio output in the second audio state, in some examples a plurality of second loudspeakers 12 (e.g. two or more of the second loudspeakers 12 of Fig. 3B) may provide audio output intended for one of the ears 15a, 15b of the user in the second audio output state. In some examples, the plurality of second loudspeakers 12 may all provide the same audio signal. In some examples, the audio signals to be output by the plurality of second loudspeakers 12 may be processed based on distances (which may, for example, be defined during installation of the system) between each of the plurality of second loudspeakers 12 and the user's head 15. The processing may cause the audio output by the two second loudspeakers 12 to sound to the user as if it originates from a particular location (e.g. in the space directly above the ear which is facing away from the headrest 10). For example, apparent origin of the audio may be aligned with the line joining the two ears 15a, 15b in Figure 3B.

In the example of Figures 3A and 3B, the control apparatus 14 may control the loudspeakers 11, 12 to transition from the first audio output state to the second audio output state in the following way. The head position detector 13 may detect that the user's head is resting on one of its sides (e.g. a position in which the right ear 15b is pressed against the headrest 10 as illustrated by Figure 3B). The head position detector 13 may send a signal indicative of the detected head position to the control apparatus 14. The control apparatus 14 may then determine the user's head position based on the signal. In response to detecting that the head 15 is in a position in which the head 15 is resting on its side, the control apparatus 14 may select the first loudspeaker 11 and one of the five second loudspeakers 12 to provide audio output. The audio output provided by the first loudspeaker 11 may be audio output intended for the ear corresponding to the side of the head 15 in contact with the headrest 10. The audio output provided by the selected second loudspeaker 12 may be audio output intended for the other ear which is facing away from the headrest 10. The second loudspeaker 12 selected to provide audio output in the second audio output state may be selected based on which one of the five second loudspeakers 12 is closest to the ear which is facing away from the headrest 10. For example, the second loudspeaker 12 which is closest to the ear facing away from the headrest 10 may be selected.

The above-described transition may be desirable because, when one of the user's ears 15a, 15b is in contact with the headrest 10, the surround sound content experienced by the user may be of relatively low quality since the ear which is in contact with the headrest 10 may not be able to hear audio from the second loudspeakers 12 due to the muffling effect of the headrest 10. By transitioning to the second audio output state, the user may still be able to experience relatively high quality stereo audio despite the fact that one of the user's ears is in contact with the headrest 10.

In order to transition to the second audio output state, the control apparatus 14 may additionally cause audio processing to be performed on the audio signals to be output by the loudspeakers 11, 12. The audio processing may comprise compensating for the differences in the distance and orientation of the loudspeakers 11, 12 in relation to the user's head. For example, the audio signal to be output by the first loudspeaker 11 may be delayed so that its delay matches the delay of the audio signal to be output by the selected second loudspeaker 12.

The audio processing may comprise processing the audio signal to be output by the first loudspeaker 11 so as to reduce and/or cancel the muffling effect of the headrest 10. This may be performed by filtering the audio signal to be output by the first loudspeaker 11 with a filter which has a response which is the inverse of the response caused by the headrest 10.

It will be appreciated that, in general, surround sound audio may be achieved using three or more loudspeakers. Therefore, in the example system of Figures 3A and 3B, three or more second loudspeakers 12 may be used rather than specifically using five second loudspeakers 12.

Although specific ways in which the audio output of the first and second loudspeakers 11, 12 may be controlled have been described with reference to the two example systems 1 of Figures 2A-2B and 3A-3B, it will be appreciated that, in general, the audio output of the first and second loudspeakers 11, 12 may be controlled in other ways based on the detected head position. For example, it will be appreciated that the control apparatus 14 may, in general, cause a first selection of one or more of the first and second loudspeakers 11, 12 to provide audio output in response to the head 15 of the user being detected to be in a first head position on the headrest 10. Furthermore, the control apparatus 14 may cause a second selection of one or more of the first and second loudspeakers 11, 12 to provide audio output in response to the head 15 of the user being detected to be in a second head position on the headrest 10. In some examples, the first selection may comprise (or, in some examples, consist of) a plurality of second loudspeakers 12. In some examples, the second selection may comprise the first loudspeaker 11 and at least one second loudspeaker 12. Furthermore, the audio signals to be output by the loudspeakers 11, 12 may be processed in certain ways in dependence on the detected head position. For example, a head-related transfer function (HRFT) and/or crosstalk cancellation filter may be selected based on the detected head position. In addition, a delay and/or an audio level (e.g. volume) for each of the loudspeakers may also be selected based on the detected head position, thereby to allow compensation for differences in the distances between the ears and the loudspeakers. In this way, the control apparatus 14 may control the audio output of the loudspeakers 11, 12 in dependence on the detected head position so as to improve the audio content experienced by the user while the user is resting their head on the headrest 10.

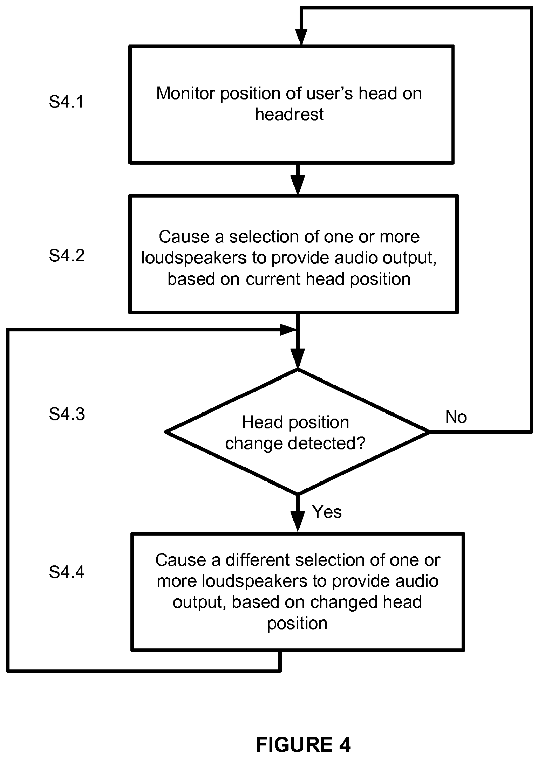

Figure 4 illustrates various operations which may be performed by the control apparatus 14.

In operation S4.1, the control apparatus 14 may monitor the position of the user's head 15 on the headrest 10, based on signals received from the head position detector 13.

In operation S4.2, the control apparatus 14 may cause a selection of one or more loudspeakers to provide audio output based on the current head position. For example, the control apparatus 14 may cause a selection of loudspeakers to provide audio output according to one of the first or second audio output states described above with reference to Figures 2A-2B and 3A-3B.

In operation S4.3, the control apparatus 14 may determine whether a change in head position has been detected. If no change has been detected, the control apparatus 14 may return to operation S4.1 and continue to monitor the positon of the user's head 15 on the headrest 10. If a change has been detected, the control apparatus 14 may proceed to operation S4.4.

In operation S4.4, the control apparatus 14 may cause a different selection of one or more loudspeakers to provide audio output based on the changed head position. For example, the control apparatus 14 may cause a selection of loudspeakers to provide audio output according to a different one of the first or second audio output states described above with reference to Figures 2A-2B and 3A-3B. Following this, the control apparatus 14 may return to operation S4.3.

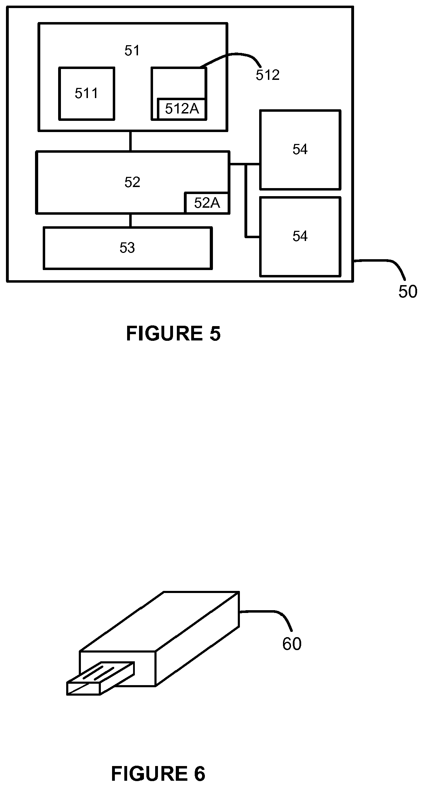

Figure 5 is a schematic block diagram of an example configuration of control (or more simply, computing) apparatus 50, which may be configured to perform any of or any combination of the operations described herein. The computing apparatus 50 may comprise memory 51, processing circuitry 52, an input 53, and one or more outputs 54. The structural elements of Figure 5 represent examples of means for performing any one of or any combination of the operations described herein. For example, computing apparatus 50 may comprise means for performing one or more steps of the methods as described in the claims and throughout the specification.

The processing circuitry 52 may be of any suitable composition and may include one or more processors 52A of any suitable type or suitable combination of types. For example, the processing circuitry 52 may be a programmable processor that interprets computer program instructions and processes data. The processing circuitry 52 may include plural programmable processors. Alternatively, the processing circuitry 52 may be, for example, programmable hardware with embedded firmware. The processing circuitry 52 may be termed processing means. The processing circuitry 52 may alternatively or additionally include one or more Application Specific Integrated Circuits (ASICs). In some instances, processing circuitry 52 may be referred to as computing apparatus.

The processing circuitry 52 described with reference to Figure 5 may be coupled to the memory 51 (or one or more storage devices) and may be operable to read/write data to/from the memory. The memory 51 may store thereon computer readable instructions 512A which, when executed by the processing circuitry 52, may cause any one of or any combination of the operations described herein to be performed. The memory 51 may comprise a single memory unit or a plurality of memory units upon which the computer-readable instructions (or code) 512A is stored. For example, the memory 51 may comprise both volatile memory 511 and non-volatile memory 512. For example, the computer readable instructions 512A may be stored in the non-volatile memory 512 and may be executed by the processing circuitry 52 using the volatile memory 511 for temporary storage of data or data and instructions. Examples of volatile memory include RAM, DRAM, and SDRAM etc. Examples of non-volatile memory include ROM, PROM, EEPROM, flash memory, optical storage, magnetic storage, etc. The memories 51 in general may be referred to as non-transitory computer readable memory media.

The input 53 may be configured to receive signals from the head position detector 13 as described herein. The input may (if the control apparatus includes the multi-channel power amplifier) additionally be configured to receive audio content for provision to the user via the one or more loudspeakers. The audio content may be received from any suitable source. The output 54 may be configured to output control signals to any one of or any combination of the parts of the system 1 described herein. In addition, in examples in which the control apparatus includes the multi-channel power amplifier, the processed/amplified audio content may be provided to the selective ones of the one more loudspeakers 11, 12 via the output 54. The input 53 and output 54 may each be any suitable type of wired or wireless communication interface.

Figure 6 illustrates an example of a computer-readable medium 60 with computer-readable instructions (code) stored thereon. The computer-readable instructions (code), when executed by a processor, may cause any one of or any combination of the operations described herein to be performed.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagram of Figure 4 is an example only and that various operations depicted therein may be omitted, reordered and/or combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. A method, comprising:
based on a signal indicative of a detected position of a user's head on a headrest, the headrest having an associated first loudspeaker, controlling an audio output of the first loudspeaker and one or more second loudspeakers, wherein the one or more second loudspeakers are located away from the headrest.

2. The method of claim 1, wherein controlling the audio output of the first and second loudspeakers comprises:
causing a first selection of one or more of the first and second loudspeakers to provide audio output in response to the head of the user being detected to be in a first head position on the headrest.

3. The method of claim 2, wherein controlling the audio output of the first and second loudspeakers comprises:
causing a second selection of one or more of the first and second loudspeakers to provide audio output in response to the head of the user being detected to be in a second head position on the headrest.

4. The method of claim 2 or 3, wherein the first selection comprises a plurality of second loudspeakers.

5. The method of claim 3 or claim 4, wherein the second selection comprises the first loudspeaker and at least one second loudspeaker.

6. The method of any one of claims 2 to 5, wherein the first selection comprises at least two second loudspeakers, thereby to provide stereo audio output to the user of the headrest.

7. The method of any one of claims 2 to 5, wherein the first selection comprises at least three second loudspeakers, thereby to provide surround sound audio output to the user of the headrest.

8. The method of any one of claims 5 to 7, wherein the second selection comprises the first loudspeaker and one second loudspeaker, thereby to provide stereo audio output to the user of the headrest.

9. The method of any one of claims 2 to 8, further comprising causing audio processing to be performed on at least one audio signal which is to be output by the second selection of one or more of the first and second loudspeakers, the audio processing comprising at least one of:
delaying an audio signal which is to be output by the first loudspeaker;
disabling crosstalk cancellation;
filtering an audio signal which is to be output by the first loudspeaker.

10. Apparatus configured to perform a method according to any one of claims 1 to 9.

11. Computer readable instructions, which when executed by computing apparatus, causes the computing apparatus to perform a method according to any one of claims 1 to 9.

12. A system comprising:
the apparatus of claim 10;
a headrest having an associated first loudspeaker;
one or more second loudspeakers which are located away from the headrest; and
a head position detector configured to output a signal indicative of a detected position of a user's head on a headrest.

13. The system of claim 12, wherein the one or more second loudspeakers comprises two second loudspeakers which are located to enable provision of stereo audio output to the user of the headrest.

14. The system of claim 12, wherein the one or more second loudspeakers comprises at least three second loudspeakers which are located to enable provision of surround sound audio output to the user of the headrest.

15. The system of any one of claims 12 to 14, wherein the head position detector comprises one of the following:
a pressure sensor;
an optical sensor; and
an ultrasound sensor.
